(19) 

**Europäisches Patentamt**
**European Patent Office**
**Office européen des brevets**

(11)   **EP 4 064 176 B1**

(12)   **EUROPEAN PATENT SPECIFICATION**

(45) Date of publication and mention
of the grant of the patent:
**27.08.2025   Bulletin 2025/35**

(21) Application number: **20889082.2**

(22) Date of filing: **09.11.2020**

(51) International Patent Classification (IPC):
*G06T 5/00* (2024.01)          *G06T 5/50* (2006.01)

(52) Cooperative Patent Classification (CPC):
**H04N 23/81; G06T 5/50; G06T 5/73; H04N 23/45;**
**H04N 23/6812; H04N 23/683;** G06T 2207/20132;
G06T 2207/20201; G06T 2207/20221; H04N 5/265

(86) International application number:
**PCT/CN2020/127605**

(87) International publication number:
**WO 2021/098544 (27.05.2021 Gazette 2021/21)**

(54) **IMAGE PROCESSING METHOD AND APPARATUS, STORAGE MEDIUM AND ELECTRONIC DEVICE**

BILDVERARBEITUNGSVERFAHREN UND -VORRICHTUNG, SPEICHERMEDIUM UND ELEKTRONISCHE VORRICHTUNG

PROCÉDÉ ET APPAREIL DE TRAITEMENT D'IMAGE, SUPPORT DE STOCKAGE ET DISPOSITIF ÉLECTRONIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:   **20.11.2019   CN 201911144463**

(43) Date of publication of application:
**28.09.2022   Bulletin 2022/39**

(73) Proprietor: **RealMe Chongqing Mobile**
**Telecommunications Corp.,**
**Ltd.**
**Chongqing 401120 (CN)**

(72) Inventor: **HUANG, Xiaoyang**
**Chongqing 401120 (CN)**

(74) Representative: **Taor, Simon Edward William**
**Venner Shipley LLP**
**200 Aldersgate**
**London EC1A 4HD (GB)**

(56) References cited:
CN-A- 101 924 874          CN-A- 109 379 522
CN-A- 109 688 329          CN-A- 109 688 329
CN-A- 110 072 058          CN-A- 111 062 881
US-A1- 2015 145 950        US-A1- 2018 007 315
US-A1- 2019 020 821

• ANONYMOUS: "Composite two images
according to a mask image with Python, Pillow",
14 May 2019 (2019-05-14), XP093034424,
Retrieved from the Internet <URL:https://note.
nkmk.me/en/python-pillow-composite/>
[retrieved on 20230324]

**Description**

TECHNICAL FIELD

The present disclosure relates to the technical field of image processing, and particularly to an image processing method, an image processing apparatus, an electronic device, and a computer-readable storage medium.

BACKGROUND

During the video shooting process, the video capture device usually shakes to a certain degree, which causes the recorded video image to be unstable and affects the video shooting effect. At present, the effect of video anti-shake can be achieved through image anti-shake technology. However, the related method results in a reduction in the sharpness and frame of the image.

It should be noted that the information disclosed in this part is just for the purpose of facilitating understanding of the background of the disclosure, and therefore may contain information not belonging to the prior art that is already known to those of ordinary skill in the art. US 2018/007315 A1 provides an electronic device includes a first camera supporting a first FOV, a second camera supporting a second FOV, and a processor configured to obtain a first image having the first FOV using the first camera, to obtain a second image, which is associated with the first image and has the second FOV using the second camera, to adjust at least one operation attribute of the first camera based on the second image, and to obtain a third image having the first FOV based on the adjusted at least one operation attribute using the first camera.

SUMMARY

The purpose of the present disclosure is to provide an image processing method, an image processing apparatus, an electronic device, and a computer-readable storage medium, which overcomes the problems caused by the limitations and defects of the related art to a certain extent, such as the reduction in the sharpness and frame of the image when performing the image shake correction.

According to the first aspect of the present disclosure, an image processing method is provided, which includes the following. A first image captured by a first camera and a second image captured by a second camera are obtained respectively, wherein the first camera and the second camera have different field of view. A fused image is determined based on the first image and the second image. An output image is obtained by performing image shake correction on the fused image. Said performing image shake correction on the fused image includes: performing image shake correction on the fused image through an electronic image stabilization algorithm. In the electronic image stabilization algorithm, after cropping the fused image, the frame size of the cropped image obtained is greater than or equal to the frame size of the second image.

According to the second aspect of the present disclosure, an electronic device is provided, which includes a first camera, a second camera, a processor, and a memory. The first camera is configured to capture a first image. The second camera is configured to capture a second image. The memory is configured to store executable instructions for the processor, wherein, the processor is configured to perform the above-mentioned image processing method by executing the executable instructions.

According to the third aspect of the present disclosure, a computer-readable storage medium is provided, which is stored with a computer program, when the computer program is executed by the processor, the above-mentioned image processing method is realized.

Exemplary embodiments of the present disclosure may have some or all of the following benefits:

In the image processing method provided by an example embodiment of the present disclosure, by fusing images captured by two cameras with different field of view, an image with a larger frame can make up for the loss of the frame of an image with a smaller frame when performing image shake correction, thereby maximizing the preservation of the frame of image. And, image fusion can improve the sharpness of the image. For example, in the case when the first camera has a larger field of view and the second camera has a higher sharpness, the image sharpness can be improved while reducing the loss of the image frame, so as to achieve a better anti-shake effect and improve user's shooting experience.

It should be understood that the foregoing general description and the following detailed description are exemplary and explanatory only, and are not restrictive of the present disclosure.

BRIEF DESCRIPTION OF THE DRAWINGS

The drawings, which are incorporated in and constitute a part of this specification, illustrate embodiments of the disclosure and serve to explain the principles of the disclosure together with the specification. Obviously, the drawings in the following description illustrate only some embodiments of the present disclosure. For those of ordinary skill in the art, other drawings can also be obtained from these drawings without creative effort.

FIG. 1 illustrates a schematic diagram of the cropped image in the image plane when the camera is still and the camera is rotated.

FIG. 2 illustrates a flowchart of an image processing method according to an embodiment of the present disclosure.

FIG. 3 illustrates the schematic diagram of calibration checkerboard.

FIG. 4 illustrates a flowchart of a method for determining a fused image in an embodiment of the present disclosure.

FIG. 5 illustrates the schematic diagram of the splicing area of the third image and the second image.

FIG. 6 illustrates a schematic structural diagram of an image processing apparatus according to an embodiment of the present disclosure.

FIG. 7 illustrates a schematic structural diagram of a computer system suitable for implementing an electronic device of an embodiment of the present disclosure.

DETAILED DESCRIPTION OF PREFERRED EMBODIMENTS

Exemplary embodiments will now be described more comprehensively with reference to the drawings. The exemplary embodiments, however, can be embodied in various forms and should not be construed as limiting examples set forth herein. Rather, these embodiments are provided to make this disclosure thorough and complete, and will fully convey the concept of the exemplary embodiments to those skilled in the art. The described features, structures, or characteristics may be combined in any suitable manner in one or more embodiments. In the following description, numerous specific details are provided in order to give a thorough understanding of the embodiments of the present disclosure. However, those skilled in the art will appreciate that the technical solutions of the present disclosure may be practiced without one or more of the specific details, or be practiced with other methods, components, devices, steps, etc. In other instances, well-known solutions have not been shown or described in detail to avoid obscuring aspects of the present disclosure.

Furthermore, the drawings are merely schematic illustrations of the present disclosure and are not necessarily drawn to scale. The same reference numerals in the drawings denote the same or similar parts, and thus their repeated descriptions will be omitted. Some of the blocks shown in the figures are functional entities that do not necessarily correspond to physically or logically separate entities. These functional entities may be implemented in software, or in one or more hardware modules or integrated circuits, or in different networks and/or processor devices and/or microcontroller devices.

At present, image anti-shake technology includes optical image stabilization algorithm and electronic image stabilization algorithm. Among them, the optical image stabilization algorithm is usually used in high-end cameras or terminal equipment due to the complex design structure and high cost. The electronic image stabilization algorithm does not require additional device structure design, and only needs to cooperate with the gyroscope that comes with the terminal device to achieve a better video anti-shake effect through the software algorithm, and is widely used in terminal device.

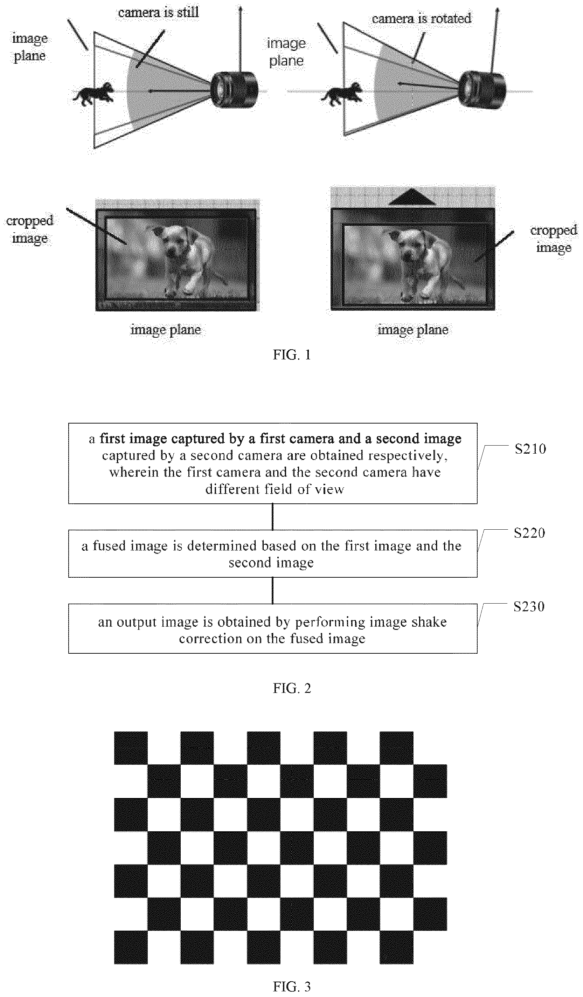

For example, in the electronic image stabilization algorithm, the motion angular velocity of the three axes of a video capture device can be detected in real time by the gyroscope, and a reverse compensation is performed by the edge cropping area, so that the picture pixels are stabilized within a certain range, and the image stabilization effect can be achieved. Referring to FIG. 1, FIG. 1 illustrates a schematic diagram of the cropped image in the image plane when the camera is still and the camera is rotated. The larger the preset cropping area, the smaller the cropped image and the stronger the anti-shake capability. However, it also leads to lower image sharpness and smaller frame.

In order to solve the problems of reduced image sharpness and reduced frame when performing image shake correction in the related art, the present disclosure provides an image processing method, an image processing apparatus, an electronic device, and a computer-readable storage medium, which can improve the sharpness of the image and increase the frame of the image when performing image shake correction.

Referring to FIG. 2, FIG. 2 illustrates a flowchart of an image processing method according to an embodiment of the present disclosure, which may include the following steps:

Step S210, a first image captured by a first camera and a second image captured by a second camera are obtained respectively, wherein the first camera and the second camera have different field of view.

Step S220, a fused image is determined based on the first image and the second image.

Step S230, an output image is obtained by performing image shake correction on the fused image.

In the image processing method provided by an embodiment of the present disclosure, by fusing images captured by two cameras with different field of view, an image with a larger frame can make up for the loss of the frame of an image with a smaller frame when performing image shake correction, thereby maximizing the preservation of the frame of image. And, image fusion can improve the sharpness of the image. For example, in the case when the first camera has a larger field of view and the second camera has a higher sharpness, the image sharpness can be improved while reducing the loss of the image frame, so as to achieve a better anti-shake effect and improve user's shooting experience.

The image processing method according to the embodiment of the present disclosure will be introduced in more detail below.

In step S210, a first image captured by a first camera and a second image captured by a second camera are obtained respectively.

The execution body of the embodiment of the present disclosure may be a video capture device, for example, a smart phone, a tablet computer, a camera, etc. The video capture device may be configured with two cameras, of course, may be configured with more cameras. Here, two cameras (for example, a first camera and a second camera) are taken as an example for description. The first camera and the second camera can simultaneously capture the same content to generate the first image and the second image respectively, and the first camera and the second camera have different field of view.

Optionally, when the field of view of the first camera is greater than the field of view of the second camera, the first camera may be a wide-angle camera. The wide-angle camera has a shorter focal length and a larger field of view, and can capture a wide range of scenes at a relatively close distance. Of course, in order to make the field of view of the first camera as large as possible, the first camera may also be an ultra-wide-angle camera. In order to improve the sharpness of the second image, the second camera may be a high-definition camera. Conversely, when the field of view of the second camera is larger than that of the first camera, the second camera may be a wide-angle camera or an ultra-wide-angle camera, and the first camera may be a high-definition camera. A wide-angle camera can be a device with a lower photosensitive area or resolution than a high-definition camera. The present disclosure takes an example in which the field of view of the first camera is larger than the field of view of the second camera.

In step S220, a fused image is determined based on the first image and the second image.

In the embodiment of the present disclosure, when the field of view of the first camera is larger than the field of view of the second camera, after the first image and the second image are fused, the field of view will increase when the obtained fused image is compared with the second image. In this way, when image shake correction is performed on the fused image, the loss of the field of view can be compensated.

It is understandable that, the larger the field of view of the camera, the more prone to distortion of the captured image. Then, for the first image captured by the first camera with a larger field of view, distortion correction and image scaling may be sequentially performed on the first image to obtain a third image. Specifically, distortion calibration can be performed on the first camera first. The image distortion includes radial distortion and tangential distortion. The distortion coefficient can be obtained from the captured checkerboard image. See FIG. 3 for a schematic diagram of the checkerboard calibration.

Among them, the mathematical model of radial distortion is:

$$u' = u(1 + k_1 r^2 + k_2 r^4 + k_3 r^6)$$

$$v' = v(1 + k_1 r^2 + k_2 r^4 + k_3 r^6),$$

and the mathematical model of tangential distortion is:

$$u'' = u + \left[ 2 p_1 v + p_2 (r^2 + 2u^2) \right]$$

$$v'' = v + \left[ p_1 (r^2 + 2v^2) + 2 p_2 u) \right],$$

Among them, $r^2 = u^2 + v^2$, $(u, v)$ is the ideal coordinate, $(u', v')$ is the coordinate after radial distortion, $(u'', v'')$ is the coordinate after tangential distortion. The values of the distortion parameters k1, k2, k3, p1, and p2 can be obtained through checkerboard calibration.

After that, $(u_1, v_1)$ corresponding to $(u_0, v_0)$ can be calculated according to the following distortion correction formula:

$$\begin{cases} x_1 = (u_0 - cx) / fx \\ y_1 = (v_0 - cy) / fy \\ r^2 = x_1^2 + y_1^2 \\ x_2 = x_1(1 + k_1 r^2 + k_2 r^4) + 2p_1 x_1 y_1 + p_2(r^2 + 2x_1^2) \\ y_2 = y_1(1 + k_1 r^2 + k_2 r^4) + p_1(r^2 + 2y_1^2) + 2p_2 x_1 y_1 \\ u_1 = fx * x2 + cx \\ v_1 = fy * y2 + cy \end{cases},$$

Among them, cx, cy, fx, fy are camera internal parameters, which can also be obtained by checkerboard calibration, $(u_0, v_0)$ is the pixel coordinate after distortion correction, $(u_1, v_1)$ is the pixel coordinate corresponding to $(u_0, v_0)$ before distortion correction. The pixel value of the $(u_1, v_1)$ coordinate point in the image before the distortion correction is sequentially filled into the $(u_0, v_0)$ coordinate of the image after the distortion correction, and the image distortion correction process is completed.

After the distortion correction is performed on the first image, image scaling processing may be performed on the distortion corrected image according to the image scaling formula:

$$x' = x((p_1 w_2)/(p_2 w_1))$$

$$y' = y((p_1 w_2)/(p_2 w_1)),$$

Among them, $(x',y')$ is the pixel coordinate after scaling, $(x, y)$ is the pixel coordinate before scaling, $p_1$ and $w_1$ represent the width of the physical size and the number of pixels in the horizontal direction of the effective photosensitive area of the image sensor in the first camera respectively, $p_2$ and $w_2$ represent the width of the physical size and the number of pixels in the horizontal direction of the effective photosensitive area of the image sensor in the second camera respectively.

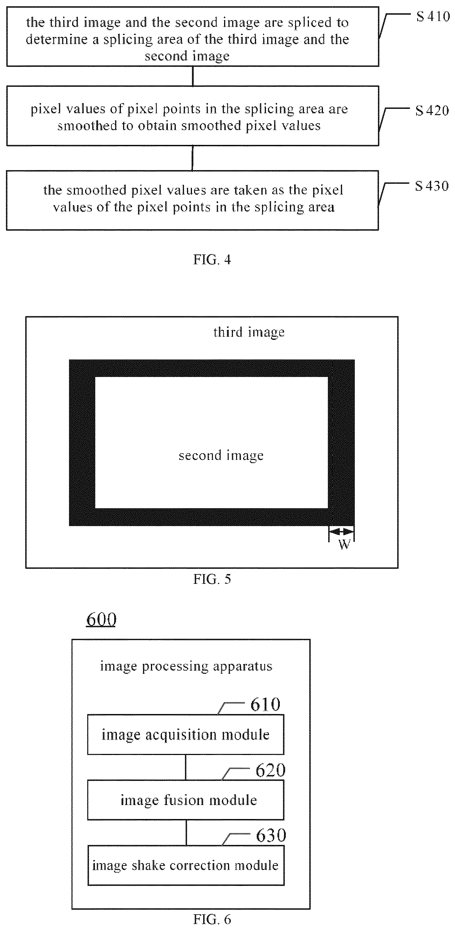

Image scaling refers to a process of adjusting the size of an image, and image scaling in this embodiment of the present disclosure refers to scaling up an image, so that the scaled-up image (ie, the third image) has the same pixel ratio as the second image, so that image stitching can be performed directly with the second image. When splicing the third image and the second image, a mapping relationship between the coordinates of the pixels in the second image and the coordinates of the pixels in the third image can be generated. According to the mapping relationship, the distortion correction formula and the image scaling formula, the third image and the second image can be fused to obtain a fused image. The determination process of the fused image can be seen in FIG. 4, which may include the following steps:
Step S410, the third image and the second image are spliced to determine a splicing area of the third image and the second image.

Specifically, the Stitching module in Opencv (open source computer vision library) can be used to splice the third image and the second image, and the mapping relationship between the coordinates of the pixels in the second image and the coordinates of the pixels in the third image can be obtained. Among them, Opencv can implement many general algorithms in image processing and computer vision, for example, the Stitching module can implement image splicing and so on.

Step S420, pixel values of pixel points in the splicing area are smoothed to obtain smoothed pixel values.

It can be understood that, since the field of view of the first camera is larger and the frame of the first image is larger, then, after performing distortion correction and image scaling on the first image, the first image is enlarged, and the obtained splicing area of the third image and the second image is the outer circular area of the second image. Referring to FIG. 5, FIG. 5 illustrates a schematic diagram of the splicing area of the third image and the second image. It can be seen that the third image can be used as the background, the second image can be used as the foreground, and the splicing area is the shadow area.

After image splicing, there is a certain brightness difference between the input third image and the second image, resulting in obvious light and dark changes at both sides of the spliced image seam line (that is, the outer ring line of the shadow area in FIG. 5). Therefore, the splicing area can be smoothed. Optionally, for any pixel point in the splicing area in the second image, a weighted average of the pixel value of that pixel point and a pixel value of a target pixel point corresponding to that pixel point in the third image can be performed to obtain a smoothed pixel value. Wherein, the pixel value of the pixel point in the second image can be obtained directly, and the pixel value of the target pixel point in the third image can be determined in the following way:

Firstly, the coordinates of the target pixel point are determined.

In the embodiment of the present disclosure, the coordinates of any pixel point in the splicing area in the second image can be obtained first, and the coordinates of the target pixel point can be determined according to those coordinates and a mapping relationship between coordinates obtained when the image is spliced previously.

Secondly, an initial pixel point in the first image corresponding to the target pixel point is determined based on the coordinates of the target pixel point.

In the embodiment of the present disclosure, since the target pixel point is a pixel point in the third image, and the third image is obtained by performing distortion correction and image scaling on the first image, therefore, according to the coordinates of the target pixel point, the initial pixel point in the first image corresponding to the target pixel point is obtained through the above-mentioned distortion correction formula and the image scaling formula.

Finally, the pixel value of the initial pixel point is taken as the pixel value of the target pixel point.

Of course, in the embodiment of the present disclosure, the coordinates of that pixel point can also be directly determined according to any pixel point in the splicing area in the third image, and the coordinates of corresponding pixel point in the second image can be determined according to the mapping relationship between the coordinates. The pixel value of that pixel point and the pixel value of the target pixel point corresponding to that pixel point in the second image are performed weighted average to obtain the smoothed pixel value.

The weighted average formula in the embodiment of the present disclosure may be: $H = d \times H_W + (1 - d) \times H_M$, where d is an adjustable factor, $0 \le d \le 1$, along the direction from the third image to the second image, d gradually changes from 1 to 0, H represents the smoothed pixel value, $H_W$ represents the pixel value of the pixel point in the third image, and $H_M$ represents the pixel value of the pixel point in the second image. Among them, the weighted smoothing algorithm can deal with the seam problem quickly and easily.

In an implementation of the present disclosure, in order to establish greater correlation between the pixel points in the image splicing area and the third image and the second image, can make: d=d1/(d1+d2), that is, the weighted average formula can also be: $H = \dfrac{d_1}{d_1 + d_2} \times H_W + \dfrac{d_2}{d_1 + d_2} \times H_M$, and through weighted average of this formula, the pixel value of each pixel point in the splicing area can be calculated.

Among them, d1+d2=w, w represents the width of the splicing area, if the splicing is left and right splicing, d1 and d2 represent the distances from a pixel point in the splicing area to the left and right boundaries of the splicing area; if the splicing is up and down splicing, then d1 and d2 represent the distances from the a pixel point in the splicing area to the upper and lower boundaries of the splicing area, respectively. For example, the shadow area (ie, the splicing area) in FIG. 5 can be divided into four areas: top, bottom, left and right. The left area and the right area are left and right splicing, and the upper area and the lower area are up and down splicing.

Step S430, the smoothed pixel values are taken as the pixel values of the pixel points in the splicing area.

It should be noted that, for the non-splicing area within the splicing area, the pixel value of the pixel point in the area may be the pixel value of the pixel point in the second image; for the non-splicing area outside the splicing area, the pixel value of the pixel point in the area may be the pixel value of the pixel point in the third image. So far, the pixel values of the pixel points in all regions can be determined, that is, the fused image is obtained.

Step S230, an output image is obtained by performing image shake correction on the fused image.

In the invention, image shake correction is performed on the fused image through an electronic image stabilization algorithm. Specifically, the angular velocity of motion of the three axes of the video capture device can be detected in real time through the gyroscope, and reverse compensation can be performed on the edge cropping area to stabilize the picture pixel points within a certain range to achieve the effect of image stabilization. The larger the cropping area, the smaller the cropped image, the stronger the anti-shake ability, and the lower the image sharpness and frame. In the electronic image stabilization algorithm, after cropping the fused image, the frame of the cropped image obtained is larger than or equal to the frame of the second image. That is to say, when cropping the fused image, the cropping area can be the edge area of the third image, and the edge area of the third image is used by anti-shake compensation without cropping the area where the second image is located. Therefore, an image with a larger frame than the second image can be obtained, thereby making up for the loss of the field of view and increasing the frame of the image.

It can be understood that if the user shoots a video in a stable environment, the electronic image stabilization function does not need to be turned on. In this case, the image processing method of the embodiment of the present disclosure can provide a wide-angle ultra-high-definition video mode for the user, and the user can also obtain a video with a larger frame and higher sharpness, which can improve the user's shooting experience.

In the image processing method of the embodiment of the present disclosure, two images with different field of view are fused, so that an image with a larger field of view can compensate for the loss of field of view when an image with a smaller field of view is corrected for image shake thereby maximizing the preservation of the frame of the image. In addition, image fusion can improve the sharpness of the image, and by smoothing the splicing area of the fused image, the quality of the image can be improved. For example, when the first camera has a larger field of view and the second camera has a higher resolution, even if the first camera has a lower resolution, the edge resolution of the image is only slightly lower than that of the main frame when the screen is shaken. However, users are generally insensitive to edge area of images. Therefore, the present disclosure can improve image sharpness while reducing the loss of image frame, thereby achieving better anti-shake effect and improving user's shooting experience.

It should be noted that although the various steps of the methods of the present disclosure are depicted in the figures in a particular order, this does not require or imply that the steps must be performed in that particular order, or that all illustrated steps must be performed to achieve the desired result. Additionally, or alternatively, certain steps may be omitted, multiple steps may be combined into one step for execution, and/or one step may be decomposed into multiple steps for execution, and the like.

Further, in the exemplary embodiment of the present disclosure, an image processing apparatus 600 is also provided, as shown in FIG. 6, which includes:

An image acquisition module 610, which is configured to obtain a first image captured by a first camera and a second image captured by a second camera respectively, wherein the first camera and the second camera have different field of view.

An image fusion module 620, which is configured to determine a fused image based on the first image and the second image.

An image shake correction module 630, which is configured to obtain an output image by performing image shake correction on the fused image.

Optionally, the image fusion module includes:

A preprocessing unit, which is configured to obtain a third image by performing distortion correction and image scaling processing on the first image in sequence, wherein the field of view of the first camera is larger than the field of view of the second camera; and

A fusion unit, which is configured to obtain the fused image by fusing the third image and the second image.

Optionally, the fusion unit is specifically configured to splice the third image and the second image to determine a splicing area of the third image and the second image; to smooth pixel values of pixel points in the splicing area to obtain smoothed pixel values; and to take the smoothed pixel values as the pixel values of the pixel points in the splicing area.

Optionally, the fusion unit smooths pixel values of the pixel points in the splicing area to obtain the smoothed pixel values through the following steps:

For any pixel point in the splicing area in the second image, a weighted average of the pixel value of that pixel point and a pixel value of a target pixel point corresponding to that pixel point in the third image is performed to obtain a smoothed pixel value.

Optionally, the fusion unit is further configured to determine the coordinates of the target pixel point; to determine an initial pixel point in the first image corresponding to the target pixel point based on the coordinates of the target pixel point; and to take the pixel value of the initial pixel point as the pixel value of the target pixel point.

The specific details of each module or unit in the above-mentioned apparatus have been described in detail in the corresponding image processing method, so they will not be repeated here.

It should be noted that although several modules or units of the apparatus for action performance are mentioned in the above detailed description, this division is not mandatory. Indeed, according to embodiments of the present disclosure, the features and functions of two or more modules or units described above may be embodied in one module or unit. Conversely, the features and functions of one module or unit described above may be further divided into multiple modules or units to be embodied.

In an exemplary embodiment of the present disclosure, an electronic device is also provided, which includes: a first camera for capturing a first image; a second camera for capturing a second image, wherein the first camera and the second camera has different field of view; a processor; a memory for storing processor-executable instructions; wherein the processor is configured to perform all or part of the steps of the image processing method in this exemplary embodiment.

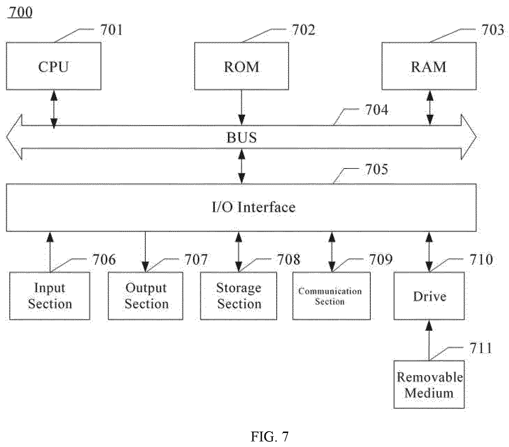

FIG. 7 illustrates a schematic structural diagram of a computer system for implementing an electronic device according to an embodiment of the present disclosure. It should be noted that the computer system 700 of the electronic device shown in FIG. 7 is only an example, and should not impose any limitations on the functions and scope of use of the embodiments of the present disclosure.

As shown in FIG. 7, a computer system 700 includes a central processing unit (CPU) 701 which can perform various appropriate actions and processes according to a program stored in a read only memory (ROM) 702 or a program loaded into a random-access memory (RAM) 703 from a storage section 708. In the RAM 703, various programs and data necessary for system operation are also stored. The CPU 701, the ROM 702, and the RAM 703 are connected to each other through a bus 704. An input/output (I/O) interface 705 is also connected to bus 704.

The following components are connected to the I/O interface 705: an input section 706 including a keyboard, a mouse, a first camera and a second camera, etc.; an output section 707 including a cathode ray tube (CRT), a liquid crystal display (LCD), etc., and a speaker, etc. ; a storage section 708 including a hard disk, etc.; and a communication section 709 including a network interface card such as a local area network (LAN) card, a modem, and the like. The communication section 709 performs communication processing via a network such as the Internet. A drive 710 is also connected to the I/O interface 705 as needed. A removable medium 711, such as a magnetic disk, an optical disk, a magneto-optical disk, a semiconductor memory, etc., is mounted on the drive 710 as needed so that a computer program read therefrom is installed into the storage section 708 as needed.

In particular, according to embodiments of the present disclosure, the processes described above with reference to the flowcharts may be implemented as computer software programs. For example, embodiments of the present disclosure include a computer program product comprising a computer program carried on a computer-readable medium, the computer program containing program code for performing the method illustrated in the flowchart. In such an embodiment, the computer program may be downloaded and installed from the network via the communication portion 709 and/or installed from the removable medium 711. When the computer program is executed by the central processing unit (CPU) 701, various functions defined in the apparatus of the present disclosure are executed.

In an exemplary embodiment of the present disclosure, there is also provided a computer-readable storage medium on which a computer program is stored, and when the computer program is executed by a processor, implements any one of the methods described above.

It should be noted that the computer-readable storage medium shown in the present disclosure may be, for example, but not limited to, an electrical, magnetic, optical, electromagnetic, infrared, or semiconductor system, apparatus or device, or any combination of the above. More specific examples of computer-readable storage medium may include, but are not limited to, electrical connections with one or more wires, portable computer disks, hard disks, random access memory (RAM), read only memory (ROM), erasable programmable read only memory (EPROM or flash memory), optical fiber, portable compact disk read only memory (CD-ROM), optical storage devices, magnetic storage devices, or any suitable combination of the above. In this disclosure, a computer-readable storage medium may be any tangible medium that contains or stores a program that can be used by or in conjunction with an instruction execution system, apparatus, or device. In the present disclosure, however, a computer-readable signal medium may include a data signal propagated in baseband or as part of a carrier, carrying computer-readable program code therein. Such propagated data signals may take a variety of forms, including but not limited to electromagnetic signals, optical signals, or any suitable combination of the foregoing. A computer-readable signal medium can also be any computer-readable medium other than a computer-readable storage medium that can transmit, propagate, or transport the program for use by or in conjunction with the instruction execution system, apparatus, or device. Program code embodied on a computer-readable medium may be transmitted using any suitable medium including, but not limited to, wireless, wireline, optical fiber cable, radio frequency, etc., or any suitable combination of the foregoing.

Other embodiments of the present disclosure will readily occur to those skilled in the art upon consideration of the specification and practice of the disclosure disclosed herein. This disclosure is intended to cover any variations, uses, or adaptations of the present disclosure, and these variations, uses, or adaptations follow the general principles of this disclosure and include common knowledge or conventional techniques in the art not disclosed in this disclosure. The specification and embodiments are to be regarded as exemplary only, with the true scope of the disclosure being indicated by the following claims.

It is to be understood that the present disclosure is not limited to the precise structures described above and illustrated in the accompanying drawings, and that various modifications and changes may be made without departing from the scope thereof. The scope of the present disclosure is limited only by the appended claims.

## Claims

1. An image processing method, comprising:

obtaining (210) a first image and a second image captured by a first camera and a second camera respectively, wherein the first camera has a larger field of view than the second camera and the second camera has a higher resolution than the first camera;
generating (220) a fused image based on the first image and the second image; and

obtaining (230) an output image by performing image shake correction on the fused image,
wherein performing image shake correction on the fused image comprises: performing image shake correction on the fused image through an electronic image stabilization algorithm, **characterized in that**,
in the electronic image stabilization algorithm, after cropping the fused image, the frame size of the cropped image obtained is greater than or equal to the frame size of the second image.

2. The method as claimed in claim 1, wherein generating (220) a fused image based on the first image and the second image comprises:

   obtaining a third image by performing distortion correction and image scaling processing on the first image in sequence, wherein the field of view of the first camera is larger than the field of view of the second camera; and
   obtaining the fused image by fusing the third image and the second image.

3. The method as claimed in claim 2, wherein obtaining the fused image by fusing the third image and the second image comprises:

   splicing (410) the third image and the second image to determine a splicing area of the third image and the second image;
   smoothing (420) pixel values of pixel points in the splicing area to obtain smoothed pixel values; and
   taking (430) the smoothed pixel values as the pixel values of the pixel points in the splicing area,
   wherein the splicing area of the third image and the second image is an outer circular area of the second image.

4. The method as claimed in claim 3, wherein the method further comprises:

   determining, based on the second image, pixel values of non-splicing area enclosed by the splicing area, and determining, based on the third image, pixel values of non-splicing area outside the splicing area.

5. The method as claimed in claim 3, wherein smoothing (420) pixel values of pixel points in the splicing area to obtain smoothed pixel values comprises:
   performing, for any pixel point in the splicing area in the second image, a weighted average of the pixel value of that pixel point and a pixel value of a target pixel point corresponding to that pixel point in the third image to obtain a smoothed pixel value.

6. The method as claimed in claim 5, wherein the pixel value of the target pixel point corresponding to that pixel point in the third image is determined by:

   determining the coordinates of the target pixel point;
   determining an initial pixel point in the first image corresponding to the target pixel point based on the coordinates of the target pixel point; and
   taking the pixel value of the initial pixel point as the pixel value of the target pixel point.

7. The method as claimed in claim 5, wherein performing a weighted average of the pixel value of that pixel point and a pixel value of a target pixel point corresponding to that pixel point in the third image comprises:

   determining the weight corresponding to the pixel value of the target pixel point based on the coordinates of that pixel point in the splicing area; and
   performing a weighted average of the pixel value of that pixel point and the pixel value of the target pixel point based on the weight corresponding to the pixel value of the target pixel point.

8. An electronic device, comprising:

   a first camera, configured to capture a first image;
   a second camera, configured to capture a second image;
   a processor; and
   a memory, configured to store executable instructions for the processor;
   wherein, the processor is configured to execute the executable instructions to:

      obtain a first image captured by a first camera and a second image captured by a second camera, wherein the first camera has a larger field of view than the second camera and the second camera has a higher resolution than the first camera;

generate a fused image based on the first image and the second image; and

obtain an output image by performing image shake correction on the fused image,

wherein performing image shake correction on the fused image comprises: performing image shake correction on the fused image through an electronic image stabilization algorithm, **characterized in that**, in the electronic image stabilization algorithm, after cropping the fused image, the frame size of the cropped image obtained is greater than or equal to the frame size of the second image.

9. The electronic device as claimed in claim 8, wherein generate a fused image based on the first image and the second image comprises:

obtain a third image by performing distortion correction and image scaling processing on the first image in sequence, wherein the field of view of the first camera is larger than the field of view of the second camera; and

obtain the fused image by fusing the third image and the second image.

10. The electronic device as claimed in claim 9, wherein obtain the fused image by fusing the third image and the second image comprises:

splice the third image and the second image to determine a splicing area of the third image and the second image;

smooth pixel values of pixel points in the splicing area to obtain smoothed pixel values; and

take the smoothed pixel values as the pixel values of the pixel points in the splicing area,

wherein the splicing area of the third image and the second image is an outer circular area of the second image.

11. The electronic device as claimed in claim 10, wherein the processor is further configured to execute the executable instructions to:

determine, based on the second image, pixel values of non-splicing area enclosed by the splicing area, and

determine, based on the third image, pixel values of non-splicing area outside the splicing area.

12. A non-transitory computer-readable storage medium having stored therein instructions that, when executed by a processor, cause the processor to:

obtain a first image captured by a first camera and a second image captured by a second camera respectively, wherein the first camera has a larger field of view than the second camera and the second camera has a higher resolution than the first camera;

generate a fused image based on the first image and the second image; and

obtain an output image by performing image shake correction on the fused image,

wherein performing image shake correction on the fused image comprises: performing image shake correction on the fused image through an electronic image stabilization algorithm, **characterized in that**,

in the electronic image stabilization algorithm, after cropping the fused image, the frame size of the cropped image obtained is greater than or equal to the frame size of the second image.

13. The non-transitory computer-readable storage medium as claimed in claim 12, wherein generate a fused image based on the first image and the second image comprises:

obtain a third image by performing distortion correction and image scaling processing on the first image in sequence, wherein the field of view of the first camera is larger than the field of view of the second camera; and

obtain the fused image by fusing the third image and the second image.

**Patentansprüche**

1. Bildverarbeitungsverfahren, das Folgendes umfasst:

Erhalten (210) eines ersten Bildes und eines zweiten Bildes, die durch eine erste Kamera bzw. eine zweite Kamera aufgenommen werden, wobei die erste Kamera ein größeres Sichtfeld als die zweite Kamera aufweist und die zweite Kamera eine höhere Auflösung als die erste Kamera aufweist;

Erzeugen (220) eines fusionierten Bildes auf der Grundlage des ersten Bildes und des zweiten Bildes und Erhalten (230) eines Ausgabebildes durch Durchführen einer Bilderschütterungskorrektur am fusionierten Bild, wobei das Durchführen einer Bilderschütterungskorrektur am fusionierten Bild Folgendes umfasst: Durchführen einer Bilderschütterungskorrektur am fusionierten Bild durch einen elektronischen Bildstabilisierungsalgorithmus,

**dadurch gekennzeichnet, dass**

im elektronischen Bildstabilisierungsalgorithmus nach dem Beschneiden des fusionierten Bildes die Rahmengröße des erhaltenen beschnittenen Bildes größer oder gleich der Rahmengröße des zweiten Bildes ist.

2. Verfahren nach Anspruch 1, wobei das Erzeugen (220) eines fusionierten Bildes auf der Grundlage des ersten Bildes und des zweiten Bildes Folgendes umfasst:

Erhalten eines dritten Bildes durch der Reihe nach Durchführen einer Verzerrungskorrektur und einer Bildskalierungsverarbeitung am ersten Bild, wobei das Sichtfeld der ersten Kamera größer als das Sichtfeld der zweiten Kamera ist; und
Erhalten des fusionierten Bildes durch Zusammenführen des dritten Bildes und des zweiten Bildes.

3. Verfahren nach Anspruch 2, wobei das Erhalten des fusionierten Bildes durch Zusammenführen des dritten Bildes und des zweiten Bildes Folgendes umfasst:

Spleißen (410) des dritten Bildes und des zweiten Bildes, um einen Spleißbereich des dritten Bildes und des zweiten Bildes zu bestimmen;
Glätten (420) von Pixelwerten von Pixelpunkten im Spleißbereich, um geglättete Pixelwerte zu erhalten; und
Nehmen (430) der geglätteten Pixelwerte als die Pixelwerte der Pixelpunkte im Spleißbereich,
wobei der Spleißbereich des dritten Bildes und des zweiten Bildes ein äußerer kreisförmiger Bereich des zweiten Bildes ist.

4. Verfahren nach Anspruch 3, wobei das Verfahren ferner Folgendes umfasst:

Bestimmen auf der Grundlage des zweiten Bildes von Pixelwerten des Nichtspleißbereichs, der durch den Spleißbereich umschlossen ist, und
Bestimmen auf der Grundlage des dritten Bildes von Pixelwerten des Nichtspleißbereichs außerhalb des Spleißbereichs.

5. Verfahren nach Anspruch 3, wobei das Glätten (420) von Pixelwerten von Pixelpunkten im Spleißbereich, um geglättete Pixelwerte zu erhalten, Folgendes umfasst:
Bilden für einen beliebigen Pixelpunkt im Spleißbereich im zweiten Bild eines gewichteten Durchschnitts des Pixelwerts dieses Pixelpunkts und eines Pixelwerts eines Zielpixelpunkts, der diesem Pixelpunkt entspricht, im dritten Bild, um einen geglätteten Pixelwert zu erhalten.

6. Verfahren nach Anspruch 5, wobei der Pixelwert des Zielpixelpunkts, der diesem Pixelpunkt entspricht, im dritten Bild durch Folgendes bestimmt wird:

Bestimmen der Koordinaten des Zielpixelpunkts;
Bestimmen eines anfänglichen Pixelpunkts im ersten Bild, der dem Zielpixelpunkt entspricht, auf der Grundlage der Koordinaten des Zielpixelpunkts; und
Nehmen des Pixelwerts des anfänglichen Pixelpunkts als den Pixelwert des Zielpixelpunkts.

7. Verfahren nach Anspruch 5, wobei das Bilden eines gewichteten Durchschnitts des Pixelwerts dieses Pixelpunkts und eines Pixelwerts eines Zielpixelpunkts, der diesem Pixelpunkt entspricht, im dritten Bild Folgendes umfasst:

Bestimmen des Gewichts, das dem Pixelwert des Zielpixelpunkts entspricht, auf der Grundlage der Koordinaten dieses Pixelpunkts im Spleißbereich und
Bilden eines gewichteten Durchschnitts des Pixelwerts dieses Pixelpunkts und des Pixelwerts des Zielpixelpunkts auf der Grundlage des Gewichts, das dem Pixelwert des Zielpixelpunkts entspricht.

8. Elektronische Vorrichtung, die Folgendes umfasst:

eine erste Kamera, die konfiguriert ist, ein erstes Bild aufzunehmen;
eine zweite Kamera, die konfiguriert ist, ein zweites Bild aufzunehmen;
einen Prozessor und
einen Arbeitsspeicher, der konfiguriert ist, ausführbare Befehle für den Prozessor zu speichern;
wobei der Prozessor konfiguriert ist, die ausführbaren Befehle auszuführen zum:

Erhalten eines ersten Bildes, das durch eine erste Kamera aufgenommen wird, und eines zweiten Bildes, das durch eine zweite Kamera aufgenommen wird, wobei die erste Kamera ein größeres Sichtfeld als die zweite Kamera aufweist und die zweite Kamera eine höhere Auflösung als die erste Kamera aufweist;
Erzeugen eines fusionierten Bildes auf der Grundlage des ersten Bildes und des zweiten Bildes und
Erhalten eines Ausgabebildes durch Durchführen einer Bilderschütterungskorrektur am fusionierten Bild, wobei das Durchführen einer Bilderschütterungskorrektur am fusionierten Bild Folgendes umfasst: Durchführen einer Bilderschütterungskorrektur am fusionierten Bild durch einen elektronischen Bildstabilisierungsalgorithmus,
**dadurch gekennzeichnet, dass**
im elektronischen Bildstabilisierungsalgorithmus nach dem Beschneiden des fusionierten Bildes die Rahmengröße des erhaltenen beschnittenen Bildes größer oder gleich der Rahmengröße des zweiten Bildes ist.

9. Elektronische Vorrichtung nach Anspruch 8, wobei das Erzeugen eines fusionierten Bildes auf der Grundlage des ersten Bildes und des zweiten Bildes Folgendes umfasst:

Erhalten eines dritten Bildes durch der Reihe nach Durchführen einer Verzerrungskorrektur und einer Bildskalierungsverarbeitung am ersten Bild, wobei das Sichtfeld der ersten Kamera größer als das Sichtfeld der zweiten Kamera ist; und
Erhalten des fusionierten Bildes durch Zusammenführen des dritten Bildes und des zweiten Bildes.

10. Elektronische Vorrichtung nach Anspruch 9, wobei das Erhalten eines fusionierten Bildes durch Zusammenführen des dritten Bildes und des zweiten Bildes Folgendes umfasst:

Spleißen des dritten Bildes und des zweiten Bildes, um einen Spleißbereich des dritten Bildes und des zweiten Bildes zu bestimmen;
Glätten von Pixelwerten von Pixelpunkten im Spleißbereich, um geglättete Pixelwerte zu erhalten; und Nehmen der geglätteten Pixelwerte als die Pixelwerte der Pixelpunkte im Spleißbereich,
wobei der Spleißbereich des dritten Bildes und des zweiten Bildes ein äußerer kreisförmiger Bereich des zweiten Bildes ist.

11. Elektronische Vorrichtung nach Anspruch 10, wobei der Prozessor ferner konfiguriert ist, die ausführbaren Befehle auszuführen zum:

Bestimmen auf der Grundlage des zweiten Bildes von Pixelwerten des Nichtspleißbereichs, der durch den Spleißbereich umschlossen ist, und
Bestimmen auf der Grundlage des dritten Bildes von Pixelwerten des Nichtspleißbereichs außerhalb des Spleißbereichs.

12. Nicht transitorisches computerlesbares Speichermedium, das Befehle aufweist, die in ihm gespeichert sind und die, wenn sie durch einen Prozessor ausgeführt werden, den Prozessor veranlassen zum:

Erhalten eines ersten Bildes, das durch eine erste Kamera aufgenommen wird, bzw. eines zweiten Bildes, das durch eine zweite Kamera aufgenommen wird, wobei die erste Kamera ein größeres Sichtfeld als die zweite Kamera aufweist und die zweite Kamera eine höhere Auflösung als die erste Kamera aufweist;
Erzeugen eines fusionierten Bildes auf der Grundlage des ersten Bildes und des zweiten Bildes und
Erhalten eines Ausgabebildes durch Durchführen einer Bilderschütterungskorrektur am fusionierten Bild, wobei das Durchführen einer Bilderschütterungskorrektur am fusionierten Bild Folgendes umfasst: Durchführen einer Bilderschütterungskorrektur am fusionierten Bild durch einen elektronischen Bildstabilisierungsalgorithmus,
**dadurch gekennzeichnet, dass**
im elektronischen Bildstabilisierungsalgorithmus nach dem Beschneiden des fusionierten Bildes die Rahmengröße des erhaltenen beschnittenen Bildes größer oder gleich der Rahmengröße des zweiten Bildes ist.

**13.** Nicht transitorisches computerlesbares Speichermedium nach Anspruch 12, wobei das Erzeugen eines fusionierten Bildes auf der Grundlage des ersten Bildes und des zweiten Bildes Folgendes umfasst:

Erhalten eines dritten Bildes durch der Reihe nach Durchführen einer Verzerrungskorrektur und einer Bildskalierungsverarbeitung am ersten Bild, wobei das Sichtfeld der ersten Kamera größer als das Sichtfeld der zweiten Kamera ist; und
Erhalten des fusionierten Bildes durch Zusammenführen des dritten Bildes und des zweiten Bildes.

**Revendications**

1. Procédé de traitement d'images, comportant :

l'obtention (210) d'une première image et d'une deuxième image capturées par une première caméra et une deuxième caméra respectivement, la première caméra possédant un plus grand champ de vision que la deuxième caméra et la deuxième caméra possédant une plus haute résolution que la première caméra ;
la génération (220) d'une image fusionnée d'après la première image et la deuxième image ; et
l'obtention (230) d'une image de sortie en réalisant une correction de tremblement d'image sur l'image fusionnée, la réalisation d'une correction de tremblement d'image sur l'image fusionnée comportant : la réalisation d'une correction de tremblement d'image sur l'image fusionnée par l'intermédiaire d'un algorithme de stabilisation électronique d'image, **caractérisé en ce que**
dans l'algorithme de stabilisation électronique d'image, après le rognage de l'image fusionnée, la taille de cadre de l'image rognée obtenue est supérieure ou égale à la taille de cadre de la deuxième image.

2. Procédé selon la revendication 1, la génération (220) d'une image fusionnée d'après la première image et la deuxième image comportant :

l'obtention d'une troisième image en réalisant un traitement de correction de distorsions et de mise à l'échelle d'image sur la première image en succession, le champ de vision de la première caméra étant plus grand que le champ de vision de la deuxième caméra ; et
l'obtention de l'image fusionnée en fusionnant la troisième image et la deuxième image.

3. Procédé selon la revendication 2, l'obtention de l'image fusionnée en fusionnant la troisième image et la deuxième image comportant :

le raccordement (410) de la troisième image et de la deuxième image pour déterminer une zone de raccordement de la troisième image et de la deuxième image ;
le lissage (420) de valeurs de pixels de points de pixels dans la zone de raccordement pour obtenir des valeurs de pixels lissées ; et
le fait de prendre (430) les valeurs de pixels lissées comme valeurs de pixels des points de pixels dans la zone de raccordement,
la zone de raccordement de la troisième image et de la deuxième image étant une zone circulaire extérieure de la deuxième image.

4. Procédé selon la revendication 3, le procédé comportant en outre :

la détermination, d'après la deuxième image, de valeurs de pixels d'une zone sans raccordement entourée par la zone de raccordement, et
la détermination, d'après la troisième image, de valeurs de pixels d'une zone sans raccordement à l'extérieur de la zone de raccordement.

5. Procédé selon la revendication 3, le lissage (420) de valeurs de pixels de points de pixels dans la zone de raccordement pour obtenir des valeurs de pixels lissées comportant :
la réalisation, pour tout point de pixel dans la zone de raccordement dans la deuxième image, d'une moyenne pondérée de la valeur de pixel du point de pixel considéré et d'une valeur de pixel d'un point de pixel cible correspondant au point de pixel considéré dans la troisième image pour obtenir une valeur de pixel lissée.

6. Procédé selon la revendication 5, la valeur de pixel du point de pixel cible correspondant au point de pixel considéré dans la troisième image étant déterminée en :

déterminant les coordonnées du point de pixel cible ;
déterminant un point de pixel initial dans la première image correspondant au point de pixel cible d'après les coordonnées du point de pixel cible ; et
prenant la valeur de pixel du point de pixel initial comme valeur de pixel du point de pixel cible.

7. Procédé selon la revendication 5, la réalisation d'une moyenne pondérée de la valeur de pixel du point de pixel considéré et d'une valeur de pixel d'un point de pixel cible correspondant au point de pixel considéré dans la troisième image comportant :

la détermination du poids correspondant à la valeur de pixel du point de pixel cible d'après les coordonnées du point de pixel considéré dans la zone de raccordement ; et
la réalisation d'une moyenne pondérée de la valeur de pixel du point de pixel considéré et de la valeur de pixel du point de pixel cible d'après le poids correspondant à la valeur de pixel du point de pixel cible.

8. Dispositif électronique, comportant :

une première caméra, configurée pour capturer une première image ;
une deuxième caméra, configurée pour capturer une deuxième image ;
un processeur ; et
une mémoire, configurée pour stocker des instructions exécutables destinées au processeur ;
le processeur étant configuré pour exécuter les instructions exécutables pour :

obtenir une première image capturée par une première caméra et une deuxième image capturée par une deuxième caméra, la première caméra possédant un plus grand champ de vision que la deuxième caméra et la deuxième caméra possédant une plus haute résolution que la première caméra ;
générer une image fusionnée d'après la première image et la deuxième image ; et
obtenir une image de sortie en réalisant une correction de tremblement d'image sur l'image fusionnée, la réalisation d'une correction de tremblement d'image sur l'image fusionnée comportant : la réalisation d'une correction de tremblement d'image sur l'image fusionnée par l'intermédiaire d'un algorithme de stabilisation électronique d'image, **caractérisé en ce que**
dans l'algorithme de stabilisation électronique d'image, après le rognage de l'image fusionnée, la taille de cadre de l'image rognée obtenue est supérieure ou égale à la taille de cadre de la deuxième image.

9. Dispositif électronique selon la revendication 8, la génération d'une image fusionnée d'après la première image et la deuxième image comportant :
l'obtention d'une troisième image en réalisant un traitement de correction de distorsions et de mise à l'échelle d'image sur la première image en succession, le champ de vision de la première caméra étant plus grand que le champ de vision de la deuxième caméra ; et l'obtention de l'image fusionnée en fusionnant la troisième image et la deuxième image.

10. Dispositif électronique selon la revendication 9, l'obtention de l'image fusionnée en fusionnant la troisième image et la deuxième image comportant :

le raccordement de la troisième image et de la deuxième image pour déterminer une zone de raccordement de la troisième image et de la deuxième image ;
le lissage de valeurs de pixels de points de pixels dans la zone de raccordement pour obtenir des valeurs de pixels lissées ; et
le fait de prendre les valeurs de pixels lissées comme valeurs de pixels des points de pixels dans la zone de raccordement,
la zone de raccordement de la troisième image et de la deuxième image étant une zone circulaire extérieure de la deuxième image.

11. Dispositif électronique selon la revendication 10, le processeur étant en outre configuré pour exécuter les instructions exécutables pour :

déterminer, d'après la deuxième image, des valeurs de pixels d'une zone sans raccordement entourée par la zone de raccordement, et

déterminer, d'après la troisième image, des valeurs de pixels d'une zone sans raccordement à l'extérieur de la zone de raccordement.

12. Support de stockage non transitoire lisible par ordinateur dans lequel sont stockées des instructions qui, lorsqu'elles sont exécutées par un processeur, amènent le processeur à :

obtenir une première image capturée par une première caméra et une deuxième image capturée par une deuxième caméra respectivement, la première caméra possédant un plus grand champ de vision que la deuxième caméra et la deuxième caméra possédant une plus haute résolution que la première caméra ;

générer une image fusionnée d'après la première image et la deuxième image ; et

obtenir une image de sortie en réalisant une correction de tremblement d'image sur l'image fusionnée, la réalisation d'une correction de tremblement d'image sur l'image fusionnée comportant : la réalisation d'une correction de tremblement d'image sur l'image fusionnée par l'intermédiaire d'un algorithme de stabilisation électronique d'image, **caractérisé en ce que**

dans l'algorithme de stabilisation électronique d'image, après le rognage de l'image fusionnée, la taille de cadre de l'image rognée obtenue est supérieure ou égale à la taille de cadre de la deuxième image.

13. Support de stockage non transitoire lisible par ordinateur selon la revendication 12, la génération d'une image fusionnée d'après la première image et la deuxième image comportant :

l'obtention d'une troisième image en réalisant un traitement de correction de distorsions et de mise à l'échelle d'image sur la première image en succession, le champ de vision de la première caméra étant plus grand que le champ de vision de la deuxième caméra ; et

l'obtention de l'image fusionnée en fusionnant la troisième image et la deuxième image.

image
plane

camera is still

image
plane

camera is rotated

cropped
image

cropped
image

image plane

image plane

FIG. 1

a **first image captured by a first camera and a second image**
captured by a second camera are obtained respectively,
wherein the first camera and the second camera have
different field of view

S210

a fused image is determined based on the first image and the
second image

S220

an output image is obtained by performing image shake
correction on the fused image

S230

FIG. 2

FIG. 3

| | |
|---|---|
| the third image and the second image are spliced to determine a splicing area of the third image and the second image | S 410 |

| | |
|---|---|
| pixel values of pixel points in the splicing area are smoothed to obtain smoothed pixel values | S 420 |

| | |
|---|---|
| the smoothed pixel values are taken as the pixel values of the pixel points in the splicing area | S 430 |

FIG. 4

third image

second image

W

FIG. 5

600

image processing apparatus

610

image acquisition module

620

image fusion module

630

image shake correction module

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018007315 A1